# EUROPEAN PATENT APPLICATION

(11) **EP 2 930 939 A1**
(43) Date of publication of application: **14.10.2015**
(21) Application number: 14305522.6
(22) Date of filing: 10.04.2014
(51) Int. Cl.: H04Q 11/04, H04J 3/16

(54) **Distributed TDM switching system with per-tributary protection**

(71) Applicant: ALCATEL LUCENT, 92100 Boulogne-Billancourt (FR)
(72) Inventor: Razzetti, Luca, 20059 Vimercate (IT); Pais Golin, Orsola, 20059 Vimercate (IT)
(74) Representative: Pietra, Giulia

(57) **Abstract**

It is disclosed a distributed TDM switching system and related protection mechanism. The system comprises a slicer, K TDM switches and a deslicer. The slicer receives a TDM input flow, slices each tributary thereof into K≥2 sub-tributaries and sends each sub-tributary to one of the K TDM switches. The K TDM switches switch the content of the received K sub-tributaries into K sub-tributaries, which are forwarded to the deslicer during a same timeslot. The deslicer merges the received K sub-tributaries into a tributary of a TDM output flow. The slicer also calculates redundancy information based on the content of the sliced tributary, which are switched to the deslicer by a protection TDM switch. In case it detects a failure relating to any of the received K sub-tributaries, the deslicer reconstructs its content using the redundancy information and the content of the other received sub-tributaries. This provides a per-tributary protection mechanism.

## Description

### Technical field

The present invention generally relates to the field of time division multiplexing networks. In particular, the present invention relates to a distributed time division multiplexing (TDM) switching system provided with a per-tributary protection mechanism. The present invention also relates to a method for providing a per-tributary protection mechanism to a distributed time division multiplexing (TDM) switching system.

### Background art

As it is known, in a time division multiplexing (TDM) network, digital data traffic is transmitted in the form of TDM flows, each TDM flow carrying several channels (also termed "tributaries") whose transmission is organized according to a periodic pattern. The elementary structure of this periodic pattern is a frame divided into a number of timeslots, wherein each timeslot is dedicated to the transmission of one tributary. The frames are typically organized according to a predefined hierarchy, wherein higher order frames comprise several lower order frames. Exemplary TDM network are SDH/Sonet networks.

A TDM switch is a device for TDM networks, which provides a non-blocking interconnection functionality between the T tributaries of M input TDM flows and the T tributaries of M output TDM flows. The expression "non blocking interconnection function" means that a TDM switch is capable of extracting the content of any tributary of any input TMD flow and map it into any tributary of any output TDM flow.

US 7 602 776 describes a distributed TDM switching system, wherein the interconnection functionality is split amongst K TDM switches, K being equal to or higher than 2. The distributed TDM switching system also comprises M slicers. Each slicer receives a respective TDM input flow and slices it into K TDM input sub-flows, by slicing each tributary into K sub-tributaries. Then, each slicer sends the K TDM input sub-flows to the K TDM switches (one sub-flow for each TDM switch). Each TDM switch therefore receives M TDM input sub-flows, one from every slicer, extracts their content and maps it into sub-tributaries of M TDM output sub-flows. The TDM switches are configured in the same way. This allows recovering, from the TDM output sub-flows provided by the K TDM switches, TDM output flows wherein the content of the tributaries of the TDM input flows are mapped, by means of deslicers connected at the outputs of the TDM switches.

Typically, the K TDM switches are implemented as ASICs mounted on one or more fabric boards, whereas the slicers and deslicers are implemented as separate I/O cards. Backpanel links typically connect the fabric board(s) to the I/O cards, thereby connecting the input and output ports of the TDM switches to the slicers and deslicers.

### Summary

In order to protect a distributed TDM switching system of the type described in US 7 602 776 against internal failures, hardware redundancy mechanisms may be employed. For instance, for protecting the distributed TDM switching system against failures of the K TDM switches and/or failures of the backpanel links, EPS (Equipment Protection Switching) mechanisms with 1+1 scheme or N+1 scheme may be used. According to the 1+1 scheme, 2*K TDM switches are provided within the distributed TDM switching system, namely K working TDM switches and K protection TDM switches. According to the N+1 scheme, instead, only K+1 TDM switches are provided, namely K working TDM switches and a single protection TDM switch that provides protection to all the K working TDM switches.

In any case, these hardware redundancy EPS mechanisms are device-based, namely when a failure involves a TDM switch, they replace the whole failed device with a protection device by redirecting to the protection TDM switch all the tributaries pertaining to the failed TDM switch.

This device-based approach might be appropriate when a working TDM switch is completely failed, namely when - due to the failure - the TDM switch interrupts transmission of all the incoming tributaries. However, in most cases, a failure only partially affects the operation of a working TDM switch. For instance, a failure affecting a single backpanel link connecting an input port of a working TDM switch to a certain I/O card, interrupts only the transmission of the tributaries carried by that link, while the transmission of the other tributaries pertaining to the same TDM switch is unaffected. In such scenario, replacing the whole failed TDM switch with a protection TDM switch is an excessive measure, in that it needlessly redirect all the tributaries to the protection TDM switch, even those whose transmission could have been maintained by the partially failed TDM switch.

Moreover, in case of a N+1 scheme, the device-based approach allows to protect a single TDM switch at a time. Hence, if a TDM switch becomes failed and is replaced by the protection TDM switch, the distributed TDM switch will be vulnerable to failures of the other TDM switches, at least until the first failure has been fixed. If resiliency against failures to an arbitrary number of TDM switches is desired, then a 1+1 scheme must be used. This is however more costly in terms of hardware.

Moreover, the hardware redundancy EPS mechanisms have quite long response times, due to the fact that redirection of traffic from the failed TDM switch to the protection TDM switch is software-based, namely it is managed by a software-implemented exchange of signaling messages between EPS bridges and EPS selects provided at the I/O cards of the distributed TDM switch. Such long response times may disadvantageously result in an undesired loss of traffic.

In view of the above, the inventors have tackled the problem of providing a distributed TDM switching system provided with a protection mechanism and a method for providing a protection mechanism to a distributed TDM switching system, which is capable of managing failures on a per-tributary basis (and not on a per-device basis) and having a response time shorter that known EPS mechanisms.

According to a first aspect thereof, the present invention provides a distributed TDM switching system for a communication network, the system comprising:
- a slicer configured to receive a TDM input flow and to slice the TDM input flow into K TDM input sub-flows by slicing at least one input tributary of the TDM input flow into K input sub-tributaries of the K TDM input sub-flows, K being an integer number equal to or higher than 2;
- K TDM switches configured to switch the content of the K input sub-tributaries of the K TDM input sub-flows into K output sub-tributaries of K TDM output sub-flows; and
- a deslicer configured to merge the K TDM output sub-flows into a TDM output flow by merging the K output sub-tributaries of the K TDM output sub-flows into an output tributary of the TDM output flow,
wherein the slicer is further configured to calculate redundancy information based on a content of the input tributary, the system further comprising at least one protection TDM switch configured to switch the redundancy information to the deslicer, the deslicer being further configured to, in case it detects a failure relating to at least one of the K output sub-tributaries, reconstruct the content of the at least one failed output sub-tributary using the redundancy information.

Preferably, the slicer is configured to slice the input tributary into the K input sub-tributaries before calculating the redundancy information based on the content of the input tributary. Alternatively, the slicer is configured to slice the input tributary into the K input sub-tributaries after having calculated the redundancy information based on the content of the input tributary.

Preferably, the slicer is configured to calculate the redundancy information by applying an erasure code to the content of the input tributary.

According to preferred variants, the erasure code is a systematic erasure code.

According to some embodiments, the system comprises one protection TDM switch and the deslicer comprises a parity block configured to calculate the redundancy information by applying a parity code to the content of the input tributary.

According to other embodiments, the system comprises K' protection TDM switches, K' being an integer number lower than K, and the deslicer comprises an encoder configured to calculate the redundancy information by applying a Reed Solomon RS(n, k)q code to the content of the input tributary, the Reed Solomon RS(n, k)q code having n equal to K+K' and k=K.

Preferably, the K TDM switches and at least one the protection TDM switch are configured in a same way, so that the K output sub-tributaries and the redundancy information are received at the deslicer during a same timeslot.

Preferably, the deslicer comprises K decoders and K selectors, wherein:
- each selector has a working input and a protection input, the working input being suitable for receiving a respective output sub-tributary from a respective TDM switch, and the protection input being connected to a respective decoder; and
- the respective decoder is configured to receive the redundancy information and the K-1 output sub-tributaries other than the output sub-tributary received at the working input of the selector, and to process them so as to provide a reconstructed content of said respective output sub-tributary to the protection input of the selector.

Preferably, the selector is configured to operate according to either a working mode or a protection mode, the switching between working mode and protection mode being operable on a timeslot basis, wherein:
- in the working mode, the selector provides at its output the content of the respective output sub-tributary received from the respective TDM switch via the working input; and
- in the protection mode, the selector provides at its output the reconstructed content of the respective output sub-tributary received from the respective decoder via the protection input.

Preferably, the selector is configured to switch from the working mode to the protection mode when it receives a failure indication relating to the respective output sub-tributary.

According to preferred variants, the failure indication is a hardware alarm inserted in a overhead portion of said respective output sub-tributary.

Preferably, in case of a failure affecting a link connecting said respective TDM switch to the deslicer, failure indications are provided for all the output sub-tributaries of the TDM output sub-flow transmitted from said respective TDM switch to the deslicer, so that the selector receives the failure indications and remains in the protection mode during reception of all the output sub-tributaries.

Preferably, in case of a failure affecting a link connecting the slicer to said respective TDM switch, said respective TDM switch is configured to generate failure indications for all the input sub-tributaries of the TDM input sub-flow transmitted from the slicer to said TDM switch and to switch the failure indications as if they were the missing content of the failed input sub-tributaries so that, in case one of the failure indications is mapped into said respective output sub-tributary, the selector receives the failure indication and remains in the protection mode during reception of said respective output sub-tributary.

According to a second aspect thereof, the present invention provides a method for providing a protection mechanism for a distributed TDM switching system for a communication network, said method comprising:
- receiving at the distributed TDM switching system a TDM input flow and slicing the TDM input flow into K TDM input sub-flows by slicing at least one input tributary of the TDM input flow into K input sub-tributaries of the K TDM input sub-flows, K being an integer number equal to or higher than 2;
- switching the content of the K input sub-tributaries of the K TDM input sub-flows into K output sub-tributaries of K TDM output sub-flows; and
- merging the K TDM output sub-flows into a TDM output flow by merging the K output sub-tributaries of the K TDM output sub-flows into an output tributary of the TDM output flow, and outputting the TDM output flow from the distributed TDM switching system, wherein the method further comprises:
- upon slicing the at least one input tributary of the TDM input flow into K input sub-tributaries of the K TDM input sub-flows, calculating redundancy information based on a content of the input tributary;
- upon switching the content of the K input sub-tributaries of the K TDM input sub-flows into K output sub-tributaries of K TDM output sub-flows, switching also the redundancy information; and
- upon merging the K output sub-tributaries of the K TDM output sub-flows into an output tributary of the TDM output flow, in case a failure relating to at least one of the K output sub-tributaries is detected, reconstructing the content of the at least one failed output sub-tributary using the redundancy information.

### Brief description of the drawings

The present invention will become clearer by reading the following detailed description, given by way of example and not of limitation, to be read by referring to the accompanying drawings, wherein:
- Figure 1 shows a distributed TDM switching system according to a first embodiment of the present invention;
- Figure 2 shows in further detail a slicer of the system of Figure 1;
- Figure 3 shows in further detail a deslicer of the system of Figure 1;
- Figures 4, 5 and 6 show the system of Figure 1 in three different failure scenarios;
- Figure 7 shows a distributed TDM switching system according to a second embodiment of the present invention;
- Figure 8 shows in further detail a slicer of the system of Figure 7;
- Figure 9 shows in further detail a deslicer of the system of Figure 7; and
- Figure 10 is a flow chart of the method for providing a protection mechanism to a distributed TDM switching system, according to an embodiment of the present invention.

### Detailed description of preferred embodiments of the invention

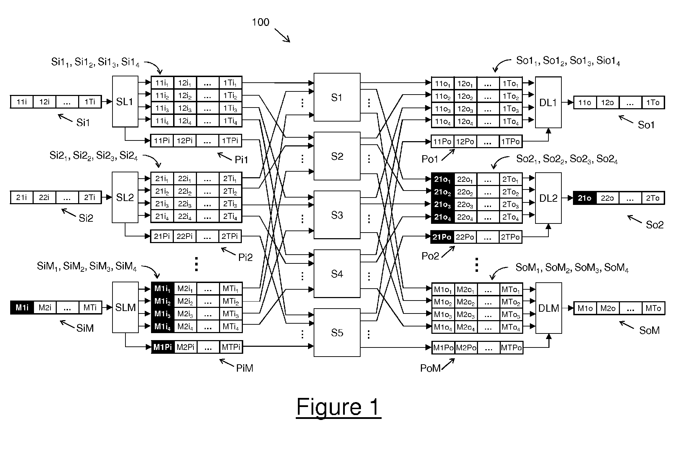

Figure 1 schematically shows a distributed TDM switching system according to a first embodiment of the present invention.

The distributed TDM switching system 100 preferably comprises a number K+1 of TDM (Time Division Multiplexing) switches, K being an integer number equal to or higher than 1. The K+1 TDM switches preferably comprise K working TDM switches and a protection TDM switch. By way of non limiting example, in the following description it is assumed K=4. Hence, the system 100 shown in Figure 1 comprises K=4 TDM working switches S1, S2, S3, S4 and a protection TDM switch S5. The TDM switches may be for instance SDH/Sonet switches. Each TDM switch is preferably implemented as an ASIC. All the ASICs of the TDM switches are preferably mounted on one ore more fabric boards.

Each TDM switch has M input ports and M output ports, M being an integer number equal to or higher than 2.

According to preferred embodiments of the present invention, the system 100 also preferably comprises M slicers SL1, SL2, ... SLM. Each slicer SL1, SL2, ... SLM has a single input (corresponding to an input of the system 100) and K+1=5 outputs. The k^{th} output of the m^{th} slicer (k=1, 2, 3, 4, 5 and m=1, 2, ... M) is preferably connected to the m^{th} input port of the k^{th} TDM switch.

According to preferred embodiments of the present invention, the system 100 also preferably comprises M deslicers SL1, SL2, ... SLM. Each deslicer DL1, DL2, ... DLM preferably has a single output (corresponding to an output of the system 100) and K+1=5 inputs. The k^{th} input of the m^{th} deslicer (k=1, 2, 3, 4, 5 and m=1, 2, ... M) is preferably connected to the m^{th} output port of the k^{th} TDM switch.

Slicers and deslicers are preferably implemented as ASICs mounted on I/O cards (also termed "fabric adapters"), that are connected to the fabric boards by means of backpanel links.

The system 100 is preferably configured to receive M TDM input flows Si1, Si2, ... SiM. Each TDM input flow Sim (m=1, 2, ... M) preferably carries T input tributaries m1i, m2i, ... mTi (T being an integer number equal to or higher than 2). The transmission of the T input tributaries m1i, m2i, ... mTi within the TDM input flow Sim is organized according to a periodic pattern, whose elementary structure is a TDM frame divided into T timeslots, each timeslot being dedicated to the transmission of a number b of bits of one input tributary. The number b is preferably equal to K (namely, the number of working TDM matrixes) or an integer multiple thereof. Figure 1 shows a single TDM frame of each TDM input flow Si1, Si2, ... SiM. The TDM frames may be for instance SDH/Sonet frames, OTN frames, etc..

Each TDM input flow Si1, Si2, ... SiM is received by a respective slicer SL1, SL2, ... SLM. Each slicers SLm preferably performs two operations:
a) slices the content of the received TDM input flow Sim into K=4 TDM input sub-flows Sim₁, Sim₂, Sim₃, Sim₄ on a per-tributary basis, namely it slices the content of each input tributary mti (t=1, 2, ... T) of the TDM input flow Sim into K=4 input sub-tributaries mti₁, mti₂, mti₃, mti₄, and inserts each one of them into one of the TDM input sub-flows Sim₁, Sim₂, Sim₃, Sim₄, respectively. Hence, the k^{th} TDM input sub-flow carries T input sub-tributaries m1iₖ, m2iₖ, ... mTiₖ, each input sub-tributary being a "slice" of one of the T input tributaries m1i, m2i, ... mTi; and
b) generates a TDM protection input flow Pim carrying redundancy information calculated based on the content of the TDM input flow Sim, on a per-tributary basis. The redundancy information are preferably calculated using an erasure code. According first embodiments of the present invention, the erasure code is a parity code, while according to other embodiments the erasure code is a systematic Reed Solomon code, as it will be described in detail herein after.

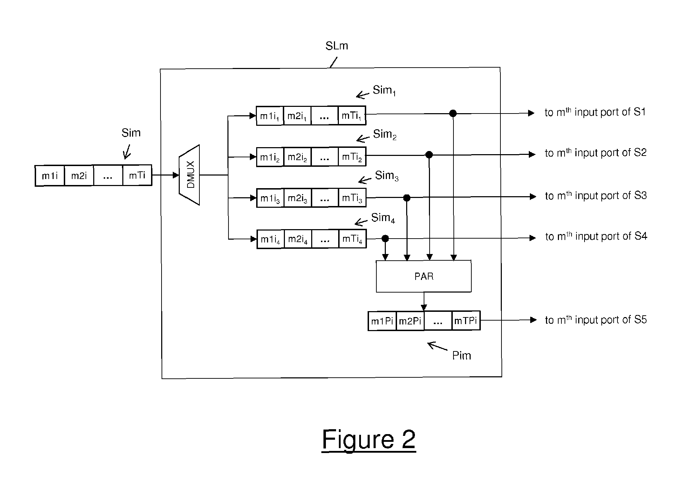

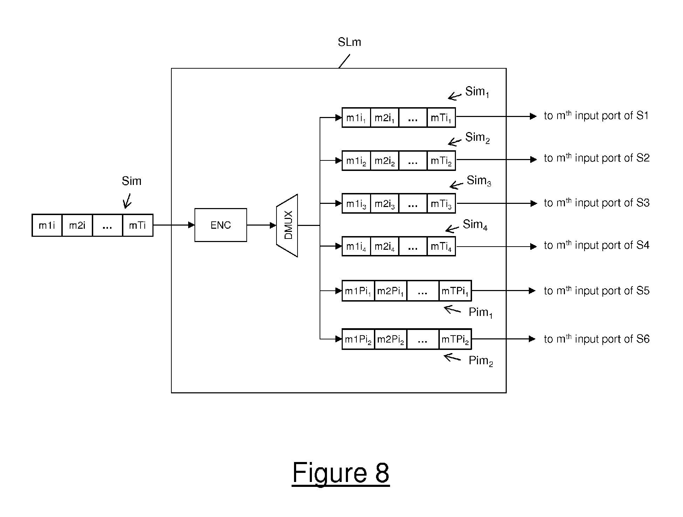

Step a) may be performed before step b) (see first embodiment of the deslicer shown in Figure 2) or after step b) (see second embodiment of the deslicer shown in Figure 8).

The structure and operation of a slicer SLm (m=1, 2 ... M) according to the first embodiment of the present invention will be now described in detail, with reference to Figure 2.

The slicer SLm preferably comprises a TDM demultiplexer DMUX and a parity block PAR. The TDM demultiplexer DMUX has a single input (corresponding to the input of the slicer SLm) and K=4 outputs (corresponding to K=4 outputs of the slicers SLm). The parity block PAR has K=4 inputs connected to the K=4 outputs of the TDM demultiplexer DMUX, and a single output that corresponds to the (K+1)^{th} output of the slicer SLm.

As the slicer SLm receives the respective TDM input flow Sim, the TDM demultiplexer DMUX preferably performs step a), as described above. The TDM demultiplexer DMUX then sends the k^{th} TDM input sub-flow to the m^{th} input port of the k^{th} working TDM switch.

Further, according to the first embodiment of the present invention, the parity block PAR preferably receives the K=4 TDM input sub-flows Sim₁, Sim₂, Sim₃, Sim₄ from the TDM demultiplexer DMUX and performs step b).

In particular, upon reception of K=4 input sub-tributaries mti₁, mti₂, mti₃, mti₄ derived from a same input tributary mti, the parity block PAR preferably calculates a corresponding parity word on the content of such K=4 input sub-tributaries. Hence, the parity block PAR preferably calculates a parity word on the content of the input sub-tributaries m1i₁, m1i₂, m1i₃, m1i₄ derived from the input tributary m1i, a parity word on the content of the input sub-tributaries m2i₁, m2i₂, m2i₃, m2i₄ derived from the input tributary m2i, ... and a parity word on the content of the input sub-tributaries mTi₁, mTi₂, mTi₃, mTi₄ derived from the input tributary mTi.

Preferably, each parity word is obtained from the respective K=4 input sub-tributaries mti₁, mti₂, mti₃, mti₄ by calculating the parity of their content on a per-bit basis. In other words, the first bit of the parity word is the parity bit of a word of K=4 bits formed by the first bit of each one of the K=4 input sub-tributaries mti₁, mti₂, mti₃, mti₄. Similarly, the second bit of the parity word is the parity bit of a word of K=4 bits formed by the second bit of each one of the K=4 input sub-tributaries mti₁, mti₂, mti₃, mti₄. And so on. According to a preferred variant, the parity bit for each K-bit word is calculated by applying K-1 XOR functions to the K bits of the K-bit word. For example, with reference e.g. to the K=4 input sub-tributaries m1i₁, m1i₂, m1i₃, m1i₄:

| | | | | | | | | |
|---|---|---|---|---|---|---|---|---|
| m1i₁: | 1 | 0 | 1 | 1 | 0 | 1 | 0 | ... |
| m1i₂: | 0 | 1 | 1 | 1 | 0 | 0 | 1 | ... |
| m1i₃: | 0 | 0 | 1 | 0 | 1 | 1 | 0 | ... |
| m1i₄: | 1 | 0 | 1 | 0 | 0 | 0 | 0 | ... |
| parity word: | 0 | 1 | 0 | 0 | 1 | 0 | 1 | ... |

The T parity words calculated as described above for each set of K=4 sub-tributaries mti₁, mti₂, mti₃, mti₄ (t=1, 2, ... T) correspond to the above mentioned redundancy information and are preferably transmitted through the (K+1)^{th} output of the slicer SLm in T protection input tributaries m1 Pi, m2Pi, ... mTPi of the TDM protection input flow Pim, whose structure, rate and capacity is the same as that of the TDM input sub-flows Sim₁, Sim₂, Sim₃, Sim₄.

Hence, while the TDM demultiplexer DMUX is sending the TDM input sub-flows Sim₁, Sim₂, Sim₃, Sim₄ to the working TDM switches S1, S2, S3, S4 (namely, it sends the k^{th} TDM input sub-flow to the m^{th} input port of the k^{th} working TDM switch Sk), the parity block PAR preferably sends the TDM protection input flow Pim to the protection TDM switch S5. In particular, the parity block PAR of the slicer SLm preferably sends the TDM protection input flow Pim to the m^{th} input port of the protection TDM switch.

Transmission of the TDM protection input flow Pim to the protection TDM switch S5 is preferably synchronized to transmission of the TDM input sub-flows Sim₁, Sim₂, Sim₃, Sim₄ to the working TDM switches S1, S2, S3, S4. In particular, the protection input tributary mtPi (t=1, 2, ... T) that carries the parity word calculated on the content of the input sub-tributaries mti₁, mti₂, mti₃, mti₄ is preferably transmitted from the slicer SLm during the same timeslot as the TDM input sub-tributaries mti₁, mti₂, mti₃, mti₄.

By referring again to Figure 1, each slicer SL1, SL2, ... SLM has the structure of SLm shown in Figure 2 and operates as described above.

Hence, preferably, the k^{th} working TDM switch Sk (k=1, 2, 3, 4) preferably receives M TDM input sub-flows Si1ₖ, Si2ₖ, ... SiMₖ, the m^{th} TDM input sub-flow being received from the k^{th} output of the m^{th} slicer SLm via the m^{th} input port of the switch. As described above, each TDM input sub-flow Simₖ (m=1, 2, .. M and k=1, 2, 3, 4) carries T input sub-tributaries m1iₖ, m2iₖ, ... mTiₖ.

The k^{th} working TDM switch Sk is also preferably configured to output M TDM output sub-flows So1ₖ, So2ₖ, ... SoMₖ, the m^{th} TDM output sub-flow being transmitted from the working TDM switch Sk to the k^{th} input of the m^{th} deslicer via the m^{th} output port of the switch. The TDM output sub-flows So1ₖ, So2ₖ, ... SoMₖ preferably have the same structure, format and capacity as the TDM input sub-flows Si1ₖ, Si2ₖ, ... SiMₖ. In particular, each TDM output sub-flow Somₖ (m=1, 2, .. M and k=1, 2, 3, 4) is suitable for carrying T output sub-tributaries m1oₖ, m20ₖ, ... MToₖ.

Preferably, the k^{th} working TDM switch Sk is configured to carry out a non-blocking interconnectivity function between the T input sub-tributaries m1iₖ, m2iₖ, ... mTiₖ of the M TDM input sub-flows Si1ₖ, Si2ₖ, ... SiMₖ and T output sub-tributaries m1oₖ, m2oₖ, ... MToₖ of the M TDM output sub-flows So1ₖ, So2ₖ, ... SoMₖ, In particular, "non-blocking interconnectivity function" means that the k^{th} working TDM switch Sk is capable of switching the content of anyone of the T input sub-tributaries m1iₖ, m2iₖ, ... mTiₖ of anyone of the received M TDM input sub-flows Si1ₖ, Si2ₖ, ... SiMₖ into anyone of the T output sub-tributaries m1oₖ, m20ₖ, ... MToₖ of anyone of the M TDM output sub-flows So1ₖ, So2ₖ, ... SoMₖ.

Preferably, the K=4 working TDM switches S1, S2, S3, S4 are all configured in the same way, namely they are configured to switch the content of K=4 input sub-tributaries mti₁, mti₂, mti₃, mti₄ received from a same slicer SLm during a same timeslot (namely, originating from a same input tributary mti) into K output sub-tributaries mto₁, mto₂, mto₃, mto₄ that are transmitted to a same deslicer DLm during a same timeslot. For instance, as shown by way of non limiting example in Figure 1, the TDM switches S1, S2, S3 and S4 may be configured to switch the content of the sub-tributaries M1i₁, M1i₂, M1i₃ and M1i₄ received from the slicer SLM during a same timeslot into the four output sub-tributaries 21o₁, 21o₂, 21o₃ and 21o₄, that are transmitted to the deslicer DL2 during the same timeslot.

According to the present invention, the protection TDM switch S5 preferably receives the M TDM protection input flows Pi1, Pi2, ... PiM, the m^{th} TDM protection input flow being received from the (K+1)^{th} output of the m^{th} slicer via the m^{th} input port of the switch. As described above, each TDM protection input flow Pim (m=1, 2, .. M) carries T protection input tributaries m1 Pi, m2Pi, ... mTPi.

The protection TDM switch S5 is also preferably configured to output M TDM protection output flows Po1, Po2, ... PoM, the m^{th} TDM protection output flow Pom being transmitted from the protection TDM switch S5 to the (K+1)^{th} input of the m^{th} deslicer via the m^{th} output port of the switch. The M TDM protection output flows Po1, Po2, ... PoM preferably have the same structure, format and capacity as the M TDM protection input flows Pi1, Pi2, ... PiM. In particular, each TDM protection output flow Pom (m=1, 2, ... M) is suitable for carrying T protection output tributaries m1 Po, m2Po, ... mTPo.

Preferably, the protection TDM switch S5 is configured to carry out a non-blocking interconnectivity function between the T protection input tributaries m1 Pi, m2Pi, ... mTPi of the M TDM protection input flows Pi1, Pi2, ... PiM and the T protection output tributaries m1 Po, m2Po, ... mTPo of the M TDM protection output flows Po1, Po2, ... PoM. In particular, "non-blocking interconnectivity function" means that the protection TDM switch S5 is capable of switching the content of anyone of the T protection input tributaries m1 Pi, m2Pi, ... mTPi of anyone of the received M TDM protection input flows Pi1, Pi2, ... PiM into anyone of the T protection output tributaries m1 Po, m2Po, ... mTPo of anyone of the M TDM protection output flows Po1, Po2, ... PoM.

Preferably, the protection TDM switch S5 is configured in the same way as the working TDM switches S1, S2, S3, S4. In particular, the protection TDM switch S5 is configured to switch the parity word carried by a certain protection input tributary mtPi (m=1, 2, ... M and t=1, 2, ... T) into the protection output tributary mtPo (m=1, 2, ... M and t=1, 2, ... T) that is received at the same deslicer DLm and during the same timeslot as the output sub-tributaries mto₁, mto₂, mto₃, mto₄ in which the content of the input sub-tributaries mti₁, mti₂, mti₃, mti₄ used for calculating that parity word has been switched by the working TDM switches S1, S2, S3, S4. In other words, the system 100 is configured so that the content of the input sub-tributaries mti₁, mti₂, mti₃, mti₄ and their redundancy information are received at the same deslicer DLm during the same timeslot.

For instance, with reference e.g. again to the input sub-tributaries M1i₁, M1i₂, M1i₃, M1i₄ derived from the input tributary M1i, as mentioned above their content is switched to the output sub-tributaries 21o₁, 21o₂, 21o₃, 21o₄ by the TDM switches S1, S2, S3, S4 (see Figure 1). According to the present invention, the protection TDM switch S5 is configured to switch the parity word carried by the protection input tributary M1Pi (calculated on the input sub-tributaries M1i₁, M1i₂, M1i₃, M1i₄) into the protection output tributary 21 Po, which - as shown in Figure 1 - is received at the deslicer DL2 during the same timeslot as the output sub-tributaries 21o₁, 21o₂, 21o₃, 21o₄.

Hence, the m^{th} deslicer DLm receives K=4 TDM output sub-flows Som₁, Som₂, Som₃, Som₄, one from each working TDM switch S1, S2, S3, S4, and a TDM protection output flow Pom from the parity TDM switch S5.

Preferably, each deslicer DLm performs two operations:
c) deslices the content of the K=4 received TDM output sub-flows Som₁, Som₂, Som₃, Som₄ into a single TDM output flow Som on a per-tributary basis; and
d) in case of failure, uses the redundancy information carried by the received TDM output flow Pom for reconstructing the missing content of one or more TDM output sub-flows Som₁, Som₂, Som₃, Som₄, on a per-tributary basis.

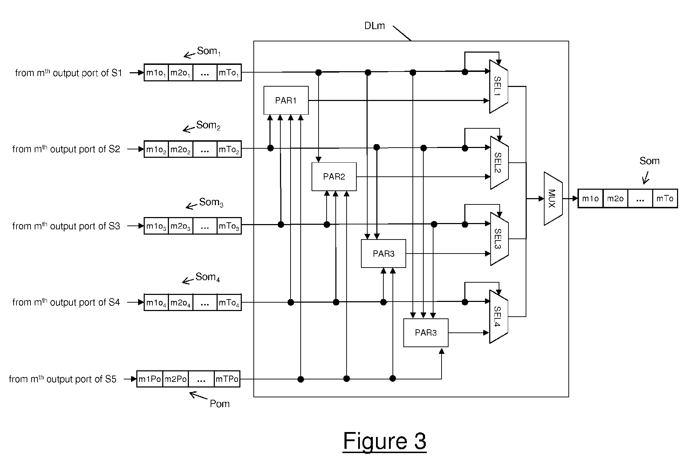

The structure and operation of the deslicer DLm (m=1, 2, ... M) according to the first embodiment of the present invention will be now described in detail with reference to Figure 3.

The deslicer DLm preferably comprises K=4 parity blocks PAR1, PAR2, PAR3, PAR4, K=4 selectors SEL1, SEL2, SEL3, SEL4 and a TDM multiplexer MUX. The TDM multiplexer MUX has a single output (corresponding to the output of the deslicer DLm) and K=4 inputs. Each selector SEL1, SEL2, SEL3, SEL4 has a working input, a protection input and an output connected to the TDM multiplexer MUX. The working input of each selector SEL1, SEL2, SEL3, SEL4 corresponds to an input of the deslicer SLm, while the protection input of each selector SEL1, SEL2, SEL3, SEL4 is connected to the output of a respective parity block PAR1, PAR2, PAR3, PAR4. Each parity block PAR1, PAR2, PAR3, PAR4 has K=4 inputs.

As the TDM output sub-flows Som₁, Som₂, Som₃, Som₄ are received at the deslicer DLm, each TDM output sub-flow Somₖ (k=1, 2, 3, 4) is received by a respective selector SELk (k=1, 2, 3, 4) via its working input. Besides, the parity block PARk (k=1, 2, 3, 4) preferably calculates the parity of the other K-1=3 TDM output sub-flows and the TDM protection output flow Pom, and provides it to the protection input of the selector SELk.

The parity calculation is made on a per-tributary basis. More particularly, upon reception of the output sub-tributaries mto₁, mto₂, mto₃, mto₄ and the protection output tributary mtPo (that, as described above, carries the parity word calculated on the content of the output sub-tributaries mto₁, mto₂, mto₃, mto₄), the parity block PARk calculates a further parity word on the content of the protection output tributary mtPo and the content of K-1=3 of the received output sub-tributaries mto₁, mto₂, mto₃, mto₄, the k^{th} output sub-tributary being directly sent to the selector SELk and being excluded from the parity calculation carried out by PARk. The parity calculation is performed on a per-bit basis, as described above with reference to the slicer SLm shown in Figure 2.

For instance, with reference e.g. to selector SEL2 and parity block PAR2, while the output sub-tributary m1o₂ is directly sent to the working input of SEL2 during a first timeslot, the parity block PAR2 calculates a further parity word on the content of the output sub-tributaries m1o₁, m1o₃, m1o₄ and the protection output tributary m1Po, and provides it to the protection input of SEL2. At the next timeslot, while the output sub-tributary m2o₂ is directly sent to the working input of SEL2, the parity block PAR2 calculates a further parity word on the content of the output sub-tributaries m2o₁, m2o₃, m2o₄ and the protection output tributary m2Po, and provides it to the protection input of the SEL2. And so on.

Hence, during each timeslot, the selector SELk receives at its working input an output sub-tributary mtoₖ (t=1, 2, ... T) of the TDM output sub-flow Somₖ and, at its protection input, the further parity word calculated by the parity block PARk as described above. It shall be noticed that, due to the intrinsic properties of parity, the further parity word provided by the parity block PARk is equal to the content of the output sub-tributary mtoₖ excluded from the parity calculation. For instance, with reference again to the parity block PAR2 and selector SEL2, the further parity word calculated by PAR2 during the first timeslot is equal to the content of the output sub-tributary m1o₂. Similarly, the further parity word calculated by PAR2 during the second timeslot is equal to the content of the output sub-tributary m2o₂. And so on.

Each selector SELk of the deslicer DLm is preferably configured to operate according to either a working mode or protection mode, the switching between working mode and protection mode being operable on a timeslot basis.

In particular, while the selector SLk is normally receiving the T output sub-tributaries m1oₖ, m2oₖ, ... mToₖ of the TDM output sub-flow Somₖ via its working input, it operates in its working mode, namely it forwards to its output (and hence to the TDM multiplexer MUX) the output sub-tributaries m1oₖ, m2oₖ, ... mToₖ received via its working input.

The TDM multiplexer MUX therefore receives the output sub-flows Som₁, Som₂, Som₃, Som₄ (one from each selector SEL1, SEL2, SEL3, SEL4), and preferably merges them on a per-tributary basis, so as to recover a TDM output flow Som carrying T output tributaries m1o, m2o, ... mTo.

Therefore, in such case, the redundancy information received at the deslicer DLm is not used.

If however, during a certain timeslot, instead of normally receiving the content of an output sub-tributary mtoₖ, the selector SELk receives a failure indication relating to that output sub-tributary mtoₖ (further details in this connection will be provided herein after), the selector SELk preferably switches from the working mode to the protection mode, namely it forwards to its output (and hence to the TDM multiplexer MUX) the further parity word received from the parity block PARk via its protection input at that timeslot. As mentioned above, this further parity word is equal to the missing content of the output sub-tributary mtoₖ, due to the intrinsic properties of parity. Hence, according to the present invention, the missing content of the output sub-tributary mtoₖ is advantageously reconstructed by the selector SELk based on the content of the other K-1=3 sub-tributaries and using the parity information carried by the TDM protection output flow Pom.

The capability of the selector SELk to reconstruct the content of the sub-tributary mtoₖ advantageously enables the TDM multiplexer MUX reconstructing the content of the whole output tributary mto and, eventually, providing a TDM output flow Som having a substantially undamaged content.

For instance, while the selector SEL2 is properly receiving all the T output sub-tributaries m1o₂, m2o₂, ... mTo2 of its TDM output sub-flow Som₂, it preferably forwards them to the TDM multiplexer MUX. The selector SEL2 therefore operates in its working mode during all the T timeslots of the TDM frame. The further parity words provided by the parity block PAR2 are accordingly ignored.

If however, during e.g. the first timeslot of a TDM frame, the selector SEL2 receives a failure indication relating to the output sub-tributary m1o₂, it preferably switches to its protection mode, thereby forwarding to the TDM multiplexer MUX the further parity word calculated by PAR2 on the contents of the output sub-tributaries m1o₁, m1o₃, m1o₄ and the protection output tributary m1 Po. The selector SEL2 remains in the protection mode until expiration of the timeslot.

At the next timeslot, if no failure indication relating to the subsequent output sub-tributary m2o₂ is detected, the selector SEL2 reverts to the working mode.

By referring again to Figure 1, each deslicer DL1, DL2, ... DLM has the structure of DLm shown in Figure 3 and operates as described above.

Hence, the system 100 is advantageously capable of reacting to any failure inducing anyone of deslicers DL1, DL2, ... DLM to fail receiving the content of one or more output sub-tributaries, since each deslicer is capable of reconstructing the missing content of failed output sub-tributaries using the redundancy information transmitted across the system 100 via the protection TDM switch S5 and the content of the non-failed output sub-tributaries.

The protection mechanism implemented by the system 100 has several advantages.

First of all, the protection mechanism provides protection on a per-tributary basis, meaning that - when a TDM switch becomes partially failed, thereby impairing transmission of a certain tributary (or, rather, a sub-tributary of a certain tributary) - the system 100 intervenes on that tributary only, without the need to redirect several tributaries (included the ones unaffected by the failure) from the partially failed TDM switch to a protection TDM switch. In other words, instead of carrying out a device-based protection, the system 100 implements a per-tributary protection wherein each tributary is treated differently, according to the failure(s) that it encounters on its path across the system 100. Tributaries whose transmission is not impaired by a failure are accordingly not affected by the protection mechanism.

Since the protection mechanism of the system 100 does not require redirecting traffic from a working TDM switch to a protection TDM switch, it does not require complex and time consuming software-implemented exchanges of signaling messages between the components of the system 100. On the contrary, the protection mechanism of the system 100 is suitable for a hardware implementation, and operates locally at the selectors of the deslicers in a very fast and automatic way on the affected tributary only, thereby providing a very short response time to failures and minimizing data loss.

Besides, a single protection TDM switch is capable to provide protection in failure scenarios in which multiple working TDM switches are simultaneously partially failed. Indeed, while comprising substantially the same hardware (namely, the same number of TDM switches) as a system provided with a known EPS N+1 protection, the system 100 maximizes the number of simultaneous failures that may be managed.

Since parity is an erasure code capable of recovering a single erased bit, the only constraint for enabling the system 100 to manage multiple failures is that such failures do not affect transmission of multiple sub-tributaries of a same tributary at the same time. Indeed, in order to recover the content of a failed sub-tributary by means of a parity code, the content of the other K-1 sub-tributaries of the same tributary shall be properly received at the deslicer.

Herein after, the operation of the system 100 in different failure scenarios will be described.

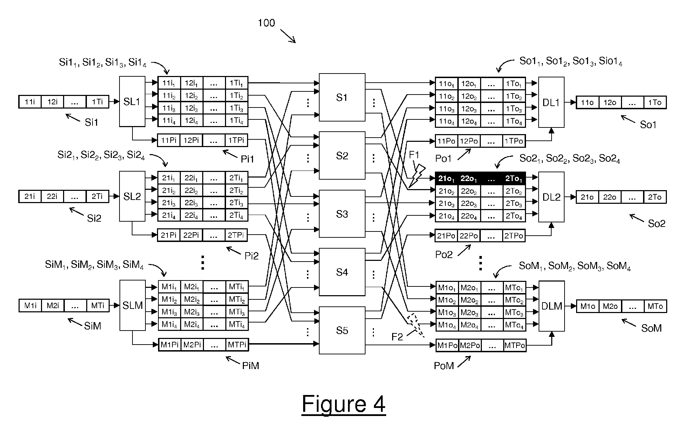

Figure 4 shows a first failure scenario in which a first failure F1 damages the backpanel link connecting the second output port of the working TDM switch S1 and the deslicer DL2. In such case, the deslicer DL2 fails to receive all the TDM output sub-flow So2₁, namely all the T output sub-tributaries 21o₁, 22o₁, ... 2To₁, of the output sub-flow So2₁. Upon occurrence of the failure F1, the selector SEL1 of the deslicer DL2 in charge of receiving the TDM output sub-flow So2₁ from the failed backpanel link receives T failure indications, one for each failed output sub-tributary 21o₁, 22o₁, ... 2To₁. The failure indication is preferably in the form of an alarm. The alarm preferably is a hardware alarm (e.g. a Loss of Frame alarm in the frame aligner). Upon reception of each alarm, the selector SEL1 of the deslicer DL2 preferably switches to its protection mode and remains in this mode during the whole timeslot. Since an alarm is received at every timeslot, the selector SEL1 remains in protection mode during all the T timeslots, thereby replacing the content of each output sub-tributary 21o₁, 22o₁, ... 2To₁ with the respective further parity word provided by parity block PAR2 of the deslicer DL2.

Hence, the system 100 is advantageously capable of reacting to a failure of an output backpanel link, namely a backpanel link connecting an output port of a working TDM switch to a deslicer.

It shall be noticed that the system 100 is also capable of reacting to multiple failures of multiple output backpanel links, provided the failed output backpanel links do not lead to a same deslicer (if parity is used). For instance, if a second failure F2 occurs on the backpanel link connecting e.g. the M^{th} output port of the TDM switch S4 and the deslicer SLM (thereby impairing reception of the all output sub-tributaries M1o₄, M2o₄, ... MTo₄), the deslicer SLM may recover the content of the failed output sub-tributaries using the parity information carried by the TDM output flow PoM, as described above.

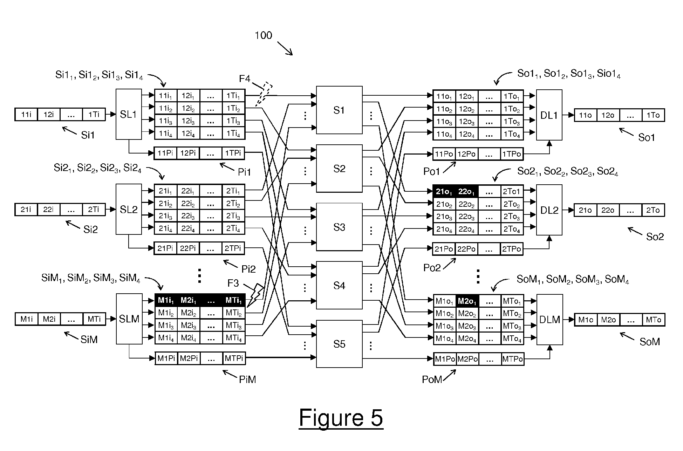

Figure 5 shows a further failure scenario, in which a failure F3 damages the backpanel link connecting the slicer SLM to the M^{th} input port of the working TDM switch S1. In this case, M^{th} input port of the working TDM switch S1 fails to receive the whole TDM input sub-flow SiM₁, namely all the T input sub-tributaries M1i₁, M2i₁, ... MTi₁ of the TDM input sub-flow SiM₁. Upon occurrence of the failure F3, the input port of the TDM switch S1 in charge of receiving the TDM input sub-flow SiM₁ from the failed backpanel link receives an alarm indicating the occurrence of the failure. The alarm preferably is a hardware alarm (e.g. a Loss of Frame alarm in the frame aligner).

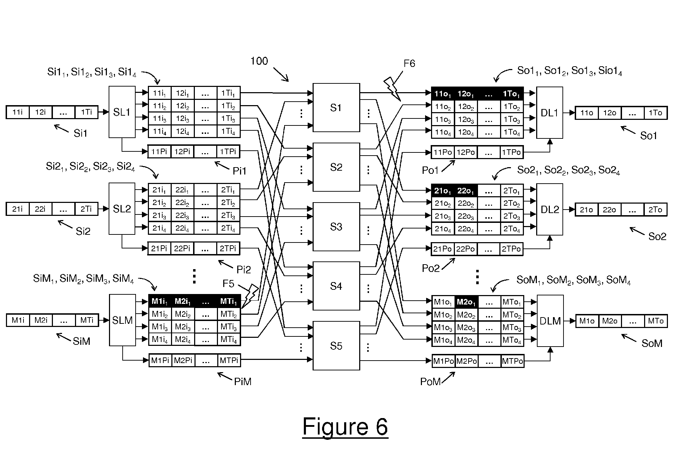

Upon reception of the alarm, the input port of the TDM switch S1 preferably generates T failure indications, one for each failed input sub-tributary. Then, the TDM switch S1 preferably switches the T failure indications as if they were the missing content of the failed input sub-tributaries M1i₁, M2i₁, ... MTi₁. In other words, the failure indication relating to the input sub-tributary Mti₁ (t=1, 2, ... T) is inserted into the output sub-tributary in which the TDM switch S1 normally maps the content of the input sub-tributary Mti₁. Preferably, the failure indication is inserted in a overhead portion of the output sub-tributary. For instance, as shown in Figure 6, the TDM switch S1 may insert the failure indication relating to the input sub-tributary M1i₁ into the output sub-tributary 21o₁, the failure indication relating to the input sub-tributary M2i₁ into the output sub-tributary 22o₁, ... and the failure indication relating to the input sub-tributary MTi₁ into the output sub-tributary M2o₁. Hence, each failure indication basically follows, through the system 100, the same path as the missing content of the corresponding failed input sub-tributary.

Within each deslicer DL1, DL2, ... DLM, as a selector during a certain timeslot receives an output sub-tributary carrying a failure indication, it preferably switches to its protection mode during that timeslot, so as to reconstruct the missing content of that output sub-tributary using the content of the other K-1=3 corresponding output sub-tributaries and the redundancy information, as described above. For instance, the deslicer DL2 recovers the missing content of the output sub-tributary 21o₁ using the content of the output sub-tributaries 21o₂, 21o₃, 21o₄ and the parity word carried by the protection output tributary 21 Po. Similarly, at the next timeslot the deslicer DL2 recovers the missing content of the output sub-tributary 22o₁ using the content of the output sub-tributaries 22o₂, 22o₃, 22To₄ and the parity word carried by the protection output tributary 22Po, while the deslicer DLM recovers the missing content of the output sub-tributary M2o₁ using the content of the output sub-tributaries M2o₂, M2o₃, M2o₄ and the parity word carried by the protection output tributary M2Po.

Hence, the system 100 is advantageously capable of reacting to a failure of an input backpanel link, namely a backpanel link connecting a slicer to an input port of a working TDM switch.

It shall be noticed that the system 100 is also capable of reacting to multiple failures of multiple input backpanel links, provided the failed input backpanel links do not originate at a same slicer (if parity is used). For instance, if a second failure F4 occurs on the backpanel link connecting e.g. the slicer SL1 to the first input port of the TDM switch S1 (see Figure 5), this impairs reception of all the input sub-tributaries 11i₁, 12i₁, ... 1Ti₁ at the first port of the TDM switch S1. The TDM switch S1 then preferably reacts as described above, namely it generates T failure indications and switches them in the output sub-tributaries in which the contents of the failed input sub-tributaries 11i₁, 12i₁, ... 1Ti₁ are usually switched. The output sub-tributaries carrying the failure indications will be then received by the deslicers and managed as described above. A deslicer may then receive a failure indication in a first output sub-tributary originated from the first failure F3 and a failure indication in a second output sub-tributary originated by the second failure F4. Since the two failure indications relate to sub-tributaries of different tributaries, the deslicer is advantageously capable of managing them and reconstructing the missing contents of both the output sub-tributaries in the proper way using the received redundancy information.

Figure 6 shows a further failure scenario, in which two failures F5 and F6 occur: F5 on the input backpanel link connecting the slicer SLM to the M^{th} input port of the working TDM switch S1, and F6 on the backpanel link connecting the first output port of the working TDM switch S1 and the deslicer DL1. The impact of the first failure F5 and the actions that the system 100 takes for remedying have been described above with reference to Figure 5. As to the second failure F6, the system 100 is capable to manage at the same time also the detrimental effects of this failure, as discussed above with reference to Figure 4. Hence, the system 100 is advantageously capable to manage multiple failures occurring either on input backpanel links and output backpanel links, provided that the multiple failure do not affect multiple sub-tributaries of a same tributary (if parity is used).

According to variants of the first embodiment not shown in the drawings, more than one protection TDM switch may be provided in the distributed TDM switching system. For instance, N protection TDM switches may be provided (N<K), each of them providing protection to K/N working TDM switches. The system according to such variants, therefore, basically comprises N subsystems, each subsystem comprising K/N working TDM switches and a protection TDM switch. The subsystems operate in parallel, the operation of each single subsystem being substantially that of system 100 described above. This allows managing multiple failures affecting multiple sub-tributaries of a same tributary, by still using a single error correction code such as a parity code.

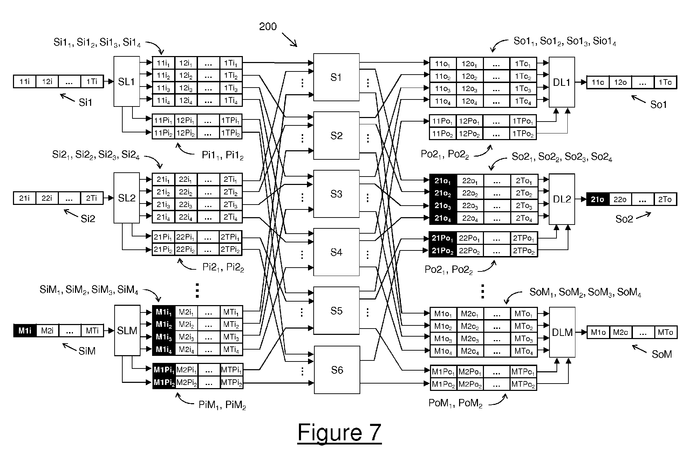

Figure 7 schematically shows a distributed TDM switching system according to a second embodiment of the present invention.

The distributed TDM switching system 200 preferably comprises a number K+K' of TDM switches including K TDM working switches and K' TDM protection switches, K and K' being integer numbers equal to or higher than 1, with K'<K. By way of non limiting example, in the following description it is assumed K=4 and K'=2. Hence, the system 200 shown in Figure 1 comprises K=4 TDM working switches S1, S2, S3, S4 and K' TDM protection switches S5, S6.

Each TDM switch has M input ports and M output ports, M being an integer number equal to or higher than 2.

The system 200 also preferably comprises M slicers SL1, SL2, ... SLM. Each slicer SL1, SL2, ... SLM has a single input (corresponding to an input of the system 200) and K+K'=6 outputs. The k^{th} output of the m^{th} slicer (k=1, 2, 3, 4, 5, 6 and m=1, 2, ... M) is preferably connected to the m^{th} input port of the k^{th} TDM switch.

The system 200 also preferably comprises M deslicers SL1, SL2, ... SLM. Each deslicer DL1, DL2, ... DLM preferably has a single output (corresponding to an output of the system 200), K+K'=6 inputs. The k^{th} input of the m^{th} deslicer (k=1, 2, 3, 4, 5, 6 and m=1, 2, ... M) is preferably connected to the m^{th} output port of the k^{th} TDM switch.

Similarly to system 100, also system 200 is preferably configured to receive M TDM input flows Si1, Si2, ... SiM. As described above, each TDM input flow Sim (m=1, 2, ... M) preferably carries T input tributaries m1i, i, m2i, ... mTi (T being an integer number equal to or higher than 2). The transmission of the T input tributaries m1i, m2i, ... mTi within the TDM input flow Sim is organized according to a periodic pattern, whose elementary structure is a TDM frame divided into T timeslots, each timeslot being dedicated to the transmission of one input tributary. In particular, during each timeslot a number b of bits of a certain input tributary are preferably transmitted. Herein after, by way of non-limiting example, it is assumed b=16 bits.

Each TDM input flow Si1, Si2, ... SiM is received by a respective slicer SL1, SL2, ... SLM.

The structure and operation of a slicer SLm (m=1, 2 ... M) according to the second embodiment will be now described in detail, with reference to Figure 8.

The slicer SLm preferably comprises an encoder ENC and a TDM demultiplexer DMUX. The encoder ENC has a single input (corresponding to the input of the slicer SLm) and a single output connected to the input of the TDM demultiplexer DMUX. The TDM demultiplexer DMUX has K+K'=6 outputs (corresponding to the K+K'=6 outputs of the slicers SLm).

According to the second embodiment, as the slicer SLm receives the respective TDM input flow Sim, the encoder ENC preferably encodes each input tributary mti (t=1, 2, ... T) (which, as said above, comprises b=16 bits per timeslot) using an erasure code. As known, an erasure code is a forward error correction (FEC) code which transforms a string of k bits into a longer string (or codeword) with n>k bits, such that the original string of k bits can be recovered from a subset of the n bits. It can be appreciated that parity (which is used in system 100 according to the first embodiment) is a particular type of erasure code where n=k+1. Preferably, the erasure code is a systematic code, namely the k original bits are literally comprised in the n bit codeword, which is therefore formed by the original k bits and n-k appended redundancy bits. Further, preferably, the erasure code is a block code. For example, the erasure code may belong to the Reed Solomon (RS) code family, namely is a RS (n, k)q code. Preferably, n (namely, the length of the codeword) is set equal to K+K'=6 (namely, the overall number of TDM switches) and k is set equal to K=4 (namely, the number of TDM working switches). Further, it is assumed q=4. This means that the encoder ENC splits the b=16 bits of each input tributary mti (t=1, 2, ... T) into k=K=4 symbols of q=4 bits and encodes each set of k=4 symbols into a respective codeword of b'=n*q=(K+K')*q=24 bits. Hence, each encoded input tributary mti comprises a codeword of b'=4x6=24 bits. Since it has been assumed that the RS code is systematic, the first k*q=K*q=16 bits of each codeword corresponds to b=16 original bits of the input tributary mti, while the last (n-k)*q=K'*q=(6-4)*4=8 bits are redundancy bits.

The encoded TDM input flow Sim is then forwarded to the TDM demultiplexer DMUX, which slices it into K=4 TDM input sub-flows Sim₁, Sim₂, Sim₃, Sim₄ and two K'=2 TDM protection input flows Pim₁, Pim₂. The TDM demultiplexer DMUX preferably slices the encoded TDM input flow Sim on a per-tributary basis, as described above with reference to the first embodiment. Hence, each encoded input tributary mti (t=1, 2, ... T) is sliced into K=4 input sub-tributaries mti₁, mti₂, mti₃, mti₄ (each one being inserted into a respective TDM input sub-flow Sim₁, Sim₂, Sim₃, Sim₄) and K'=2 protection input tributaries mtPi₁, mtPi₂ (each one being inserted into a respective TDM protection input flow Pim₁, Pim₂). The content of each encoded input tributary mti is preferably sliced on a per-symbol basis, meaning that the TDM demultiplexer DMUX inserts the 1 st symbol (of k=4 bits) of the 24 bit codeword forming the encoded input tributary mti into the input sub-tributary mti₁, the 2nd symbol (of k=4 bits) into the input sub-tributary mti₂, the 3rd symbol (of k=4 bits) into the input sub-tributary mti₃, the 4th symbol into the input sub-tributary mti₄, the 5th symbol (of k=4 bits) into the protection input tributary mtPi₁ and the 6th symbol (of k=4 bits) into the protection input tributary mtPi₂, Since it has been assumed that the erasure code is systematic, the K=4 TDM input sub-flows Sim₁, Sim₂, Sim₃, Sim₄ therefore carry respective portions of the original (namely, pre-encoding) TDM input flow Sim, whereas the TDM protection input flows Pim₁, Pim₂ carry the redundancy bits (similarly to the TDM protection input flow Pim of the first embodiment, which carries the parity bits).

Hence, it may be appreciated that, while according to the first embodiment shown in Figure 2 the slicer firstly slices the respective TDM input flow into K TDM input sub-flows and then calculates the redundancy information based on the content of the (already sliced) TDM input flow, according to the second embodiment the slicer firstly calculates the redundancy information by encoding the TDM input flow and then slices the encoded TDM input flow, thereby generating (in case of a systematic code) K TDM input sub-flows and a TDM protection input which carries the redundancy information. In any case, both the slicing and the redundancy information generation are carried out on a per-tributary basis.

The TDM demultiplexer DMUX of the slicer SLm then sends the k^{th} TDM input sub-flow to the m^{th} input port of the k^{th} TDM working switch, while it sends the TDM protection input flows Pim₁, Pim₂ to the m^{th} input port of the TDM protection switch S5, S6, respectively. Transmission of the protection input flows Pim₁, Pim₂ to the protection TDM switches S5, S6 is preferably synchronized to transmission of the TDM input sub-flows Sim₁, Sim₂, Sim₃, Sim₄ to the working TDM switches S1, S2, S3, S4. In particular, the protection input tributaries mtPi₁, mtPi₂ (t=1, 2, ... T) that carry the redundancy bits calculated on the content of the input sub-tributaries mti₁, mti₂, mti₃, mti₄ are preferably transmitted from the slicer SLm during the same timeslot as the TDM input sub-tributaries mti₁, mti₂, mti₃, mti₄.

By referring again to Figure 7, each slicer SL1, SL2, ... SLM has the structure of SLm shown in Figure 8 and operates as described above.

Hence, the k^{th} working TDM switch Sk (k=1, 2, 3, 4) preferably receives M TDM input sub-flows Si1ₖ, Si2ₖ, ... SiMₖ, the m^{th} TDM input sub-flow being received from the k^{th} output of the m^{th} slicer SLm via the m^{th} input port of the switch. Similarly, the protection TDM switch S5 preferably receives the TDM protection input flows Pi1₁, Pi2₁, ... PiM₁, while the protection TDM switch S6 preferably receives the TDM protection input flows Pi1₂, Pi2₂, ... PiM₂, the m^{th} TDM protection input flow being received from the m^{th} slicer SLm via the m^{th} input port of the switch.

The operation of the working TDM switches and protection TDM switches according to the second embodiment is substantially the same as according to the first embodiment described above. Hence, a detailed description will not be repeated.

As a result, each one of the K working TDM switches Sk (k=1, 2, 3, 4) outputs M TDM output sub-flows So1ₖ, So2ₖ, ... SoMₖ, the m^{th} TDM output sub-flow being transmitted from the working TDM switch Sk to the m^{th} deslicer via the m^{th} output port of the switch, in which the content of the M TDM input sub-flows Si1ₖ, Si2ₖ, ... SiMₖ (k=1, 2, 3, 4) has been switched.

Similarly, the protection TDM switch S5 outputs M TDM protection output flows Po1₁, Po2₁, ... PoM₁, the m^{th} TDM protection output flow being transmitted from the protection TDM switch to the m^{th} deslicer via the m^{th} output port of the switch, in which the content of the M TDM protection input flows Pi1₁, Pi2₁, ... PiM₁ has been switched. Similarly, the protection TDM switch S6 outputs M TDM protection output flows Po1₂, Po2₂, ... PoM₂, the m^{th} TDM protection output flow being transmitted from the protection TDM switch to the m^{th} deslicer via the m^{th} output port of the switch, in which the content of the M TDM protection input flows Pi1₂, Pi2₂, ... PiM₂ has been switched.

Preferably, similarly to the first embodiment, the K=4 working TDM switches S1, S2, S3, S4 and the K'=2 protection TDM switches S5, S6 are all configured in the same way. Hence, the system 200 is configured so that the content of the input sub-tributaries mti₁, mti₂, mti₃, mti₄ and their redundancy bits are received at the same deslicer DLm during the same timeslot.

Hence, the m^{th} deslicer DLm receives K=4 TDM output sub-flows Som₁, Som₂, Som₃, Som₄ (one from each working TDM switch S1, S2, S3, S4) and K'=2 TDM protection output flows Pom₁, Pom₂ (one from each protection TDM switch S5, S6).

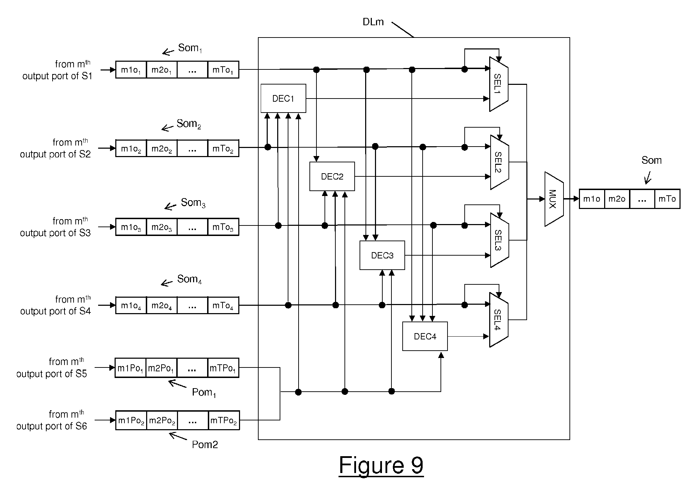

The structure and operation of the deslicer DLm (m=1, 2, ... M) will be now described in detail with reference to Figure 9. This structure applies if the erasure code is a systematic code, which entails that the TDM output sub-flows Som₁, Som₂, Som₃, Som₄ carry respective portions of the original (namely, pre-encoding) TDM input flow Sim, whereas the TDM protection output flows Pom₁, Pom₂ carry the redundancy bits (similarly to the TDM protection output flow Pom of the first embodiment).

The deslicer DLm preferably comprises K=4 decoders DEC1, DEC2, DEC3, DEC4, K=4 selectors SEL1, SEL2, SEL3, SEL4 and a TDM multiplexer MUX. The TDM multiplexer MUX has a single output (corresponding to the output of the deslicer DLm) and K=4 inputs. Each selector SEL1, SEL2, SEL3, SEL4 has a working input, a protection input and an output connected to the TDM multiplexer MUX. The working input of each selector SEL1, SEL2, SEL3, SEL4 corresponds to an input of the deslicer SLm, while the protection input of each selector SEL1, SEL2, SEL3, SEL4 is connected to the output of a respective decoder DEC1, DEC2, DEC3, DEC4.

As the TDM output sub-flows Som₁, Som₂, Som₃, Som₄ are received at the deslicer DLm, each TDM output sub-flow Somₖ (k=1, 2, 3, 4) is received by a respective selector SELk (k=1, 2, 3, 4) via its working input. Besides, the decoder DECk (k=1, 2, 3, 4) preferably, on a tributary basis, using the information of the TDM output sub-flows Som₁, Som₂, Som₃, Som₄ and the information of the TDM protection output flows Pom₁, Pom₂, and considering erased one symbol of the RS(n, k)q codeword if the corresponding sub-flow contains an alarm indication for that tributary, recovers the decoded information of the sub-tributary mtoₖ (which coincides with the sub-tributary mtoₖ when no failure is present in the system 200). For each decoder DECk (k=1, 2, 3, 4), the TDM output sub-flow Somₖ is considered erased by default, so it is not connected as an input.

Hence, during each timeslot, the selector SELk receives at its working input an output sub-tributary mtoₖ (t=1, 2, ... T) of the TDM output sub-flow Somₖ and, at its protection input, the decoded information of the sub-tributary mtoₖ recovered by the decoder DECk.

Similarly to the first embodiment, each selector SELk of the deslicer DLm is preferably configured to operate according to either a working mode or protection mode, the switching between working mode and protection mode being operable on a timeslot basis.

In particular, while the selector SELk is normally receiving the T output sub-tributaries m1oₖ, m2oₖ, ... mToₖ of the TDM output sub-flow Somₖ via its working input, it operates in its working mode, namely it forwards to its output (and hence to the TDM multiplexer MUX) the output sub-tributaries m1oₖ, m2oₖ, ... mToₖ received via its working input.

The TDM multiplexer MUX therefore receives the output sub-flows Som₁, Som₂, Som₃, Som₄ (one from each selector SEL1, SEL2, SEL3, SEL4), and preferably merges them on a tributary-by-tributary basis, so as to recover a TDM output flow Som carrying T output tributaries m1o, m2o, ... mTo. Therefore, in such case, the redundancy information carried by the TDM protection output flows Pom₁, Pom₂ is not used.

If however, during a certain timeslot, instead of normally receiving the content of its output sub-tributary mtoₖ, the selector SELk receives a failure indication relating to that output sub-tributary mtoₖ (as described above in connection with the first embodiment), the selector SELk preferably switches from the working mode to the protection mode, namely it forwards to its output (and hence to the TDM multiplexer MUX) the decoded information of the sub-tributary mtoₖ recovered by the decoder DECk.

By referring again to Figure 7, each deslicer DL1, DL2, ... DLM of the system 200 has the structure of DLm shown in Figure 9 and operates as described above.

Hence, also the system 200 is advantageously capable of reacting to failures inducing anyone of deslicers DL1, DL2, ... DLM to fail receiving the content of one or more output sub-tributaries, since each deslicer is capable of reconstructing the missing content of failed output sub-tributaries using the redundancy information transmitted across the system 200 via the protection TDM switches S5, S6 and the content of the non-failed output sub-tributaries.

It shall be noticed that, differently from the first embodiment (which uses parity), the system 200 according to the second embodiment is advantageously capable of recovering the content of a tributary also in case the content of multiple sub-tributaries derived from a same tributary is missing, e.g. due to a multiple failure. In particular, the number of sub-tributaries whose content may be simultaneously reconstructed depends on the correction capability of the erasure code. If, as described above, a RS(n,k)q erasure code is used, then (n-k) symbols of q erased bits may be recovered. This means that, within a tributary of b=16 bits, if n=6, k=4 and q=4, up to 2 symbols of 4 erased bits may be recovered. This means that using this erasure code the number of sub-tributaries whose content may be simultaneously reconstructed is 8/4=2.

Hence, the system 200 is for instance advantageously capable of properly reconstructing the content of the tributary 21o of the TDM output flow So2 following to a multiple failure simultaneously affecting e.g. the links connecting the deslicer DL2 to the working TDM switches S1 and S2, which causes the content of both sub-tributaries 21o₁ and 21o₂ being missing at the deslicer DL2. The deslicer DL2 is indeed capable of properly reconstructing the content of both the missing sub-tributaries 21o₁ and 21o₂ using the content of the other sub-tributaries 21o₃ and 21o₄ and the redundancy information comprised in the corresponding output tributaries 21 Po₁ and 21 Po₂.

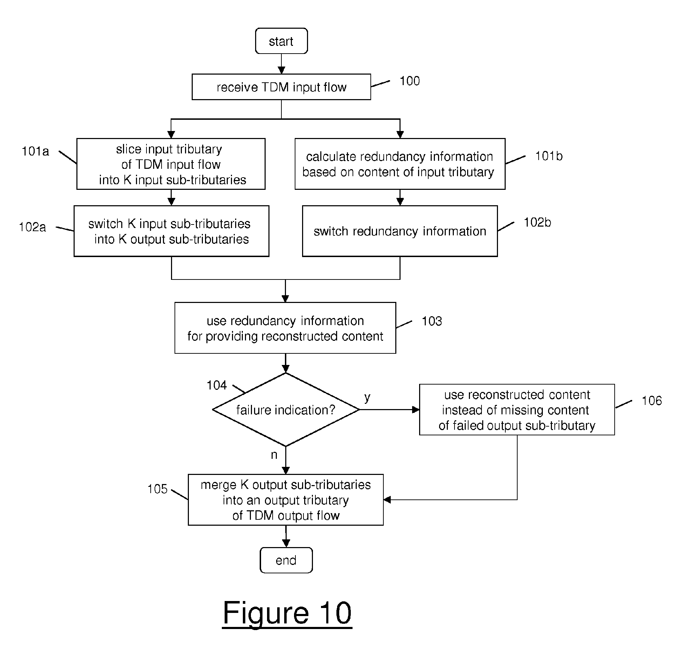

Figure 10 is a flow chart of a method for providing a per-tributary protection mechanism to a distributed TDM switching system, according to embodiments of the present invention.

The method comprises a first step 100 of receiving M TDM input flows Si1, Si2, ... SiM. Preferably, the M TDM input flows Si1, Si2, ... SiM are received at the M slicers SL1, SL2, ... SLM of the distributed TDM switching system, one TDM input flow Sim per each slicer SLm (m=1, 2, ... M) (step 100).

Then, the content of each received TDM input flow Sim is preferably sliced into K TDM input sub-flows on a per-tributary basis (step 101 a). In particular, at step 101 a each input tributary of each TDM input flow is sliced into K input sub-tributaries of K TDM input sub-flows.

Besides, redundancy information are preferably calculated based on the content of the TDM input flow Sim, on a per-tributary basis (step 101 b). In particular, the content of each input tributary is preferably used for calculating respective redundancy information. The redundancy information are preferably calculated using an erasure code.

Steps 101 a and 101 b are preferably carried out by each slicer SLm on the received TDM input flow Sim. Further, step 101 a may be performed before or after step 101 b.

Then, the content of K input sub-tributaries derived from a same input tributary is switched into K corresponding output sub-tributaries of K TDM output sub-flows (step 102a). Step 102a is preferably carried out by K TDM switches working in parallel and having a same configuration. This way, as a result of step 102a, the K input sub-tributaries obtained from a same input tributary are received at a same deslicer DLm of the distributed TDM switching system during a same timeslot.

Besides, the redundancy information generated at step 101b are preferably switched to the deslicer DLm (step 102b). Step 102b is preferably carried out by a TDM protection switch of the distributed TDM switching system. Step 102b is preferably carried out substantially at the same time as step 102a, so that the redundancy information calculated based on the content of a certain input tributary are received at the deslicer DLm during the same timeslot as the K TDM output sub-flows carrying slices of such content.

Then, upon reception of K output sub-tributaries and their associated redundancy information during a same timeslot, the redundancy information are used for providing a reconstructed content of at least one of the received K output sub-tributaries (step 103).

Then, it is checked whether a failure indication relating to any of the received K output sub-tributaries is received (step 104). In the negative, the content of the received K output sub-tributaries is merged into a single output tributary of a TDM output flow Som (step 105). In the affirmative, the content reconstructed at step 103 is used instead of the missing content of the failed output sub-tributary (step 106), so that it is merged with the content of the other not failed output sub-tributaries at step 105, in order to provide said output tributary of said TDM output flow.

Steps 103-106 are preferably carried out by a deslicer DLm of the distributed TDM switching system. Further, steps 103-106 are preferably iterated at each timeslot, thereby providing a per-tributary protection mechanism.

The functions of the various elements shown in the drawings, including any functional blocks labeled as "device", "unit", "block" or "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the terms "processing unit", "device", "block" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. A distributed TDM switching system (100, 200) for a communication network, said system (100, 200) comprising:
- a slicer (SLm) configured to receive a TDM input flow (Sim) and to slice said TDM input flow (Sim) into K TDM input sub-flows (Sim₁, Sim₂, Sim₃, Sim₄) by slicing at least one input tributary of said TDM input flow (Sim) into K input sub-tributaries of said K TDM input sub-flows, K being an integer number equal to or higher than 2;
- K TDM switches (S1, S2, S3, S4) configured to switch the content of said K input sub-tributaries of said K TDM input sub-flows (Sim₁, Sim₂, Sim₃, Sim₄) into K output sub-tributaries of K TDM output sub-flows (Som₁, Som₂, Som₃, Som₄); and
- a deslicer (DLm) configured to merge said K TDM output sub-flows (Som₁, Som₂, Som₃, Som₄) into a TDM output flow (Som) by merging said K output sub-tributaries of said K TDM output sub-flows (Som₁, Som₂, Som₃, Som₄) into an output tributary of said TDM output flow (Som),
wherein said slicer (SLm) is further configured to calculate redundancy information based on a content of said input tributary, said system (100, 200) further comprising at least one protection TDM switch (S5; S5, S6) configured to switch said redundancy information to said deslicer (DLm), said deslicer (DLm) being further configured to, in case it detects a failure relating to at least one of said K output sub-tributaries, reconstruct the content of said at least one failed output sub-tributary using said redundancy information.

2. The system (100, 200) according to claim 1, wherein said slicer (SLm) is configured to slice said input tributary into said K input sub-tributaries before calculating said redundancy information based on said content of said input tributary.

3. The system (100, 200) according to claim 1, wherein said slicer (SLm) is configured to slice said input tributary into said K input sub-tributaries after having calculated said redundancy information based on said content of said input tributary.

4. The system (100, 200) according to any of the preceding claims, wherein said slicer (SLm) is configured to calculate said redundancy information by applying an erasure code to said content of said input tributary.

5. The system (100, 200) according to claim 4, wherein said erasure code is a systematic erasure code.

6. The system according to claim 5, wherein said system (100) comprises one protection TDM switch (S5) and said deslicer (DLm) comprises a parity block (PAR) configured to calculate said redundancy information by applying a parity code to said content of said input tributary.

7. The system (100, 200) according to claim 5, wherein said system (200) comprises K' protection TDM switches (S5, S6), K' being an integer number lower than K, and said deslicer (DLm) comprises an encoder (ENC) configured to calculate said redundancy information by applying a Reed Solomon RS(n, k)q code to said content of said input tributary, said Reed Solomon RS(n, k)q code having n equal to K+K' and k=K.

8. The system (100) according to any of the preceding claims, wherein said K TDM switches and at least one said protection TDM switch are configured in a same way, so that said K output sub-tributaries and said redundancy information are received at said deslicer (DLm) during a same timeslot.

9. The system (100, 200) according to any of the preceding claims, wherein said deslicer (DLm) comprises K decoders (PAR1, PAR2, PAR3, PAR4; DEC1, DEC2, DEC3, DEC4) and K selectors (SEL1, SEL2, SEL3, SEL4), wherein:
- each selector (SELk) has a working input and a protection input, said working input being suitable for receiving a respective output sub-tributary of said K output sub-tributaries from a respective TDM switch of said K TDM switches, and said protection input being connected to a respective decoder (PARk; DECk) of said K decoders (PAR1, PAR2, PAR3, PAR4; DEC1, DEC2, DEC3, DEC4); and
- said respective decoder (PARk, DECk) is configured to receive said redundancy information and the K-1 output sub-tributaries other than said output sub-tributary received at said working input of said selector (SELk) and to process them so as to provide a reconstructed content of said respective output sub-tributary to said protection input of said selector (SELk).

10. The system (100, 200) according to claim 9, wherein said selector (SELk) is configured to operate according to either a working mode or a protection mode, the switching between working mode and protection mode being operable on a timeslot basis, wherein:
- in said working mode, said selector (SELk) provides at its output the content of said respective output sub-tributary received from said respective TDM switch via said working input; and
- in said protection mode, said selector (SELk) provides at its output said reconstructed content of said respective output sub-tributary received from said respective decoder (PARk, DECk) via said protection input.

11. The system (100, 200) according to claim 10, wherein said selector (SELk) is configured to switch from said working mode to said protection mode when it receives a failure indication relating to said respective output sub-tributary.

12. The system (100, 200) according to claim 11, wherein said failure indication is a hardware alarm inserted in a overhead portion of said respective output sub-tributary.

13. The system (100, 200) according to any of claims 9 to 12 wherein, in case of a failure affecting a link connecting said respective TDM switch to said deslicer (DLm), failure indications are provided for all the output sub-tributaries of the TDM output sub-flow transmitted from said respective TDM switch to said deslicer (DLm), so that said selector (SELk) receives said failure indications and remains in said protection mode during reception of all said output sub-tributaries.

14. The system (100, 200) according to any of claims 9 to 13 wherein, in case of a failure affecting a link connecting said slicer (SLm) to said respective TDM switch, said respective TDM switch is configured to generate failure indications for all the input sub-tributaries of the TDM input sub-flow transmitted from the slicer (SLm) to said TDM switch and to switch said failure indications as if they were the missing content of said failed input sub-tributaries so that, in case one of said failure indications is switched into said respective output sub-tributary, said selector (SELk) receives said failure indication and remains in said protection mode during reception of said respective output sub-tributary.

15. A method for providing a protection mechanism for a distributed TDM switching system (100, 200) for a communication network, said method (100, 200) comprising:
- receiving at said distributed TDM switching system (100, 200) a TDM input flow (Sim) and slicing said TDM input flow (Sim) into K TDM input sub-flows (Sim1, Sim2, Sim3, Sim4) by slicing at least one input tributary of said TDM input flow (Sim) into K input sub-tributaries of said K TDM input sub-flows, K being an integer number equal to or higher than 2;
- switching the content of said K input sub-tributaries of said K TDM input sub-flows (Sim₁, Sim2, Sim3, Sim4) into K output sub-tributaries of K TDM output sub-flows (Som₁, Som₂, Som₃, Som4); and
- merging said K TDM output sub-flows (Som₁, Som₂, Som₃, Som₄) into a TDM output flow (Som) by merging said K output sub-tributaries of said K TDM output sub-flows (Som₁, Som₂, Som₃, Som₄) into an output tributary of said TDM output flow (Som), and outputting said TDM output flow (Som) from said distributed TDM switching system (100, 200),
wherein said method further comprises:
- upon slicing said at least one input tributary of said TDM input flow (Sim) into K input sub-tributaries of said K TDM input sub-flows, calculating redundancy information based on a content of said input tributary;
- upon switching the content of said K input sub-tributaries of said K TDM input sub-flows (Sim1, Sim2, Sim3, Sim4) into K output sub-tributaries of K TDM output sub-flows, switching also said redundancy information; and
- upon merging said K output sub-tributaries of said K TDM output sub-flows (Som1, Som2, Som3, Som4) into an output tributary of said TDM output flow (Som), in case a failure relating to at least one of said K output sub-tributaries is detected, reconstructing the content of said at least one failed output sub-tributary using said redundancy information.
